# EUROPEAN PATENT APPLICATION

(11) **EP 3 239 181 A1**
(43) Date of publication of application: **01.11.2017**
(21) Application number: 15873308.9
(22) Date of filing: 25.12.2015
(51) Int. Cl.: C08C 19/02, B32B 17/10, C03C 27/12, C08C 19/25, C08F 297/04

(54) **BLOCK COPOLYMER HYDRIDE AND LAMINATED GLASS**

(30) Priority: 25.12.2014 JP 2014263364
(71) Applicant: Zeon Corporation, Tokyo 100-8246 (JP)
(72) Inventor: KOIDE, Youhei, Tokyo 100-8246 (JP); HARAUCHI, Yosuke, Tokyo 100-8246 (JP); ISHIGURO, Atsushi, Tokyo 100-8246 (JP); KOHARA, Teiji, Tokyo 100-8246 (JP)
(74) Representative: Maiwald Patentanwalts GmbH
(86) International application number: PCT/JP2015/086316
(87) International publication number: WO 2016/104740

(57) **Abstract**

The present invention is a hydrogenated block copolymer [D] obtained by hydrogenating a block copolymer [C] that comprises two or more polymer blocks [A] and one or more polymer blocks [B], the polymer block [A] comprising a monomer unit derived from an aromatic vinyl compound as a main component, and the polymer block [B] comprising a monomer unit derived from a linear conjugated diene compound as a main component, the hydrogenated block copolymer [D] having a low-temperature-side tanδ peak temperature of -20 to 20°C and a high-temperature-side tanδ peak temperature of 100°C or more with respect to dynamic viscoelastic properties, the hydrogenated block copolymer [D] being obtained by hydrogenating 90% or more of unsaturated carbon-carbon bonds included in a main chain, a side chain, and an aromatic ring of the block copolymer [C] that is characterized in that a ratio (wA:wB) of a total weight fraction wA of the polymer block [A] in the block copolymer [C] to a total weight fraction wB of the polymer block [B] in the block copolymer [C] is 15:85 to 40:60, and a ratio of structural units derived from 1,2-addition polymerization and 3,4-addition polymerization with respect to a total amount of structural units derived from the linear conjugated diene compound included in the polymer block [B] is 40 wt% or more, and the hydrogenated block copolymer [D] having a weight average molecular weight of 40,000 to 200,000.

## Description

### TECHNICAL FIELD

The present invention relates to a hydrogenated block copolymer that has specific viscoelastic properties, and a laminated glass that includes a sheet as an interlayer, and exhibits excellent sound insulation properties, the sheet being formed of the hydrogenated block copolymer or a modified product thereof.

### BACKGROUND ART

A laminated glass is highly safe since glass fragments are scattered to only a small extent even when breakage has occurred due to a collision, and penetration rarely occurs. Therefore, a laminated glass is widely used as window glass, a wall material, a floor material, a roof material, and the like used for automobiles, airplanes, buildings, and the like.

In recent years, a laminated glass that exhibits improved sound insulation properties has been used to improve automotive comfort and the like. A glass material has low damping performance. For example, when a laminated glass in which glass sheets having a thickness of about 3 mm are bonded, the sound transmission loss decreases (i.e., sound insulation properties deteriorate) due to a coincidence effect within a medium-high frequency range from 2,000 Hz to 3,000 Hz. The coincidence effect may be reduced (i.e., sound insulation properties may be improved) while preventing a situation in which glass fragments are scattered due to breakage, by bonding glass sheets through a resin interlayer that exhibits excellent damping performance.

Examples of such a laminated glass include (a) a laminated glass that utilizes a laminated interlayer that uses two types of polyvinyl acetal and a plasticizer (Patent Literature 1 to 3), (b) a laminated glass that utilizes an interlayer in which a rubber layer formed of a butyl rubber or a thermoplastic block copolymer rubber is bonded to each side of a reinforcing film (Patent Literature 4), (c) a laminated glass that utilizes an interlayer in which an adhesive resin layer formed of a polyvinyl acetal-based resin or the like is stacked on each side of a hydrogenated styrene-diene block copolymer layer (Patent Literature 5 and 6), and the like.

However, since a polyvinyl acetal-based resin that is widely used as an interlayer of a laminated glass and includes a large amount of plasticizer has a relatively low softening point, displacement of the glass sheets, or air bubbles may occur after the glass sheets have been bonded. Moreover, since a polyvinyl acetal-based resin has high hygroscopicity, whitening may gradually occur from the peripheral area, and adhesion to glass may decrease when the laminated glass is subjected to a high-humidity atmosphere for a long time. Therefore, it is necessary to strictly control the water content in order to control adhesion to glass (Non-Patent Literature 1), for example.

A laminated glass in which the interlayer includes a rubber layer has an excellent capability to prevent a situation in which glass fragments are scattered due to breakage, exhibits excellent penetration resistance, and also exhibits excellent sound insulation properties. However, such a laminated glass exhibits poor transparency and poor heat resistance, for example.

Patent Literature 7 and 8 disclose that a material that exhibits excellent damping performance that reduces a vibration and noise can be obtained by utilizing a block copolymer or a hydrogenated product thereof, the block copolymer including a polymer block that includes an aromatic vinyl compound, and a polymer block that includes a conjugated diene compound, the conjugated diene compound being polymerized through a 3,4-bond and/or a 1,2-bond, and having a loss tangent (tanδ) peak temperature of 0°C or more with respect to viscoelastic properties.

However, Patent Literature 7 and 8 are silent about a reduction in coincidence effect with respect to a laminated glass.

Patent Literature 9 discloses a laminated glass that utilizes an adhesive that includes a hydrogenated block copolymer obtained by introducing an alkoxysilyl group into a hydrogenated block copolymer that is obtained by hydrogenating 90% or more of unsaturated bonds included in the main chain, the side chain, and the aromatic ring of a block copolymer that includes a polymer block that includes an aromatic vinyl compound as the main component (hereinafter may be referred to as "polymer block [A]"), and a polymer block that includes a linear conjugated diene compound as the main component (hereinafter may be referred to as "polymer block [B]"), wherein the ratio (wA:wB) of the weight fraction wA of the polymer block [A] in the block copolymer to the weight fraction wB of the polymer block [B] in the block copolymer is 30:70 to 60:40.

However, Patent Literature 9 is silent about a technique that provides sound insulation properties.

### CITATION LIST

### PATENT LITERATURE

Patent Literature 1: JP-A-4-254444 (US5,190,826)
Patent Literature 2: JP-A-6-000926
Patent Literature 3: JP-A-9-156967
Patent Literature 4: JP-A-1-244843
Patent Literature 5: JP-A-2007-91491
Patent Literature 6: JP-A-2009-256128
Patent Literature 7: JP-A-2-102212
Patent Literature 8: JP-A-2-300218
Patent Literature 9: WO2013/176258 (US2015/0104654A)

### NON-PATENT LITERATURE

Non-Patent Literature 1: Yasuyuki Fujisaki, Nikkakyo Geppo (Japan Chemical Industry Association monthly), 35 (10), 28 (1982)

### SUMMARY OF INVENTION

### TECHNICAL PROBLEM

The invention was conceived in view of the above situation. An object of the invention is to provide a specific hydrogenated block copolymer, and a laminated glass that exhibits excellent sound insulation properties, and includes a laminated glass interlayer that is formed of the hydrogenated block copolymer or a modified product thereof.

### SOLUTION TO PROBLEM

The inventors conducted extensive studies with regard to a material for producing an interlayer for obtaining a laminated glass that exhibits excellent heat resistance, excellent humidity resistance, excellent sound insulation properties, and the like. As a result, the inventors found that, when an interlayer is used that is formed of a hydrogenated block copolymer (hereinafter may be referred to as "hydrogenated block copolymer [D]") obtained by hydrogenating the unsaturated carbon-carbon bonds included in the main chain, the side chain, and the aromatic ring of a block copolymer (hereinafter may be referred to as "block copolymer [C]") that includes a polymer block that includes an aromatic vinyl compound as the main component, and a polymer block that includes a linear conjugated diene compound as the main component, the glass transition temperature (hereinafter may be referred to as "glass transition temperature Tg₁") of a soft segment formed of the polymer block [B] being within a specific range, the coincidence effect is reduced with respect to the resulting laminated glass, and the sound insulation properties are improved. This finding has led to the completion of the invention.

Note that the term "glass transition temperature (Tg)" used herein refers to a value calculated from the tanδ peak top temperature with respect to the dynamic viscoelastic properties of the hydrogenated block copolymer [D]. The low-temperature-side glass transition temperature derived from the soft segment of the hydrogenated block copolymer [D] is referred to as "glass transition temperature Tg₁", and the high-temperature-side glass transition temperature derived from the hard segment of the hydrogenated block copolymer [D] is referred to as "glass transition temperature Tg₂".

Several aspects of the invention provide the following hydrogenated block copolymer, modified hydrogenated block copolymer, sheet, and laminated glass (see (1) to (4)).
(1) A hydrogenated block copolymer [D] obtained by hydrogenating a block copolymer [C] that includes two or more polymer blocks [A] and one or more polymer blocks [B], the polymer block [A] including a monomer unit derived from an aromatic vinyl compound as the main component, and the polymer block [B] including a monomer unit derived from a linear conjugated diene compound as the main component, the hydrogenated block copolymer [D] having a low-temperature-side tanδ peak temperature of-20 to 20°C and a high-temperature-side tanδ peak temperature of 100°C or more with respect to dynamic viscoelastic properties,
   the hydrogenated block copolymer [D] being obtained by hydrogenating 90% or more of the unsaturated carbon-carbon bonds included in the main chain, the side chain, and the aromatic ring of the block copolymer [C] that is characterized in that the ratio (wA:wB) of the total weight fraction wA of the polymer block [A] in the block copolymer [C] to the total weight fraction wB of the polymer block [B] in the block copolymer [C] is 15:85 to 40:60, and the ratio of structural units derived from 1,2-addition polymerization and 3,4-addition polymerization with respect to the total amount of structural units derived from the linear conjugated diene compound included in the polymer block [B] is 40 wt% or more, and
   the hydrogenated block copolymer [D] having a weight average molecular weight of 40,000 to 200,000.
(2) A modified hydrogenated block copolymer [E] obtained by introducing an alkoxysilyl group into the hydrogenated block copolymer [D] according to (1).
(3) A laminated glass including glass sheets, and at least one sheet that is formed of the hydrogenated block copolymer [D] according to (1) and/or the modified hydrogenated block copolymer [E] according to (2), the glass sheets being bonded in a state in which the at least one sheet is provided between the glass sheets as an interlayer.

### ADVANTAGEOUS EFFECTS OF INVENTION

The aspects of the invention thus provides a specific hydrogenated block copolymer, and a laminated glass that includes a sheet formed of the hydrogenated block copolymer, and exhibits improved sound insulation properties.

### BRIEF DESCRIPTION OF DRAWINGS

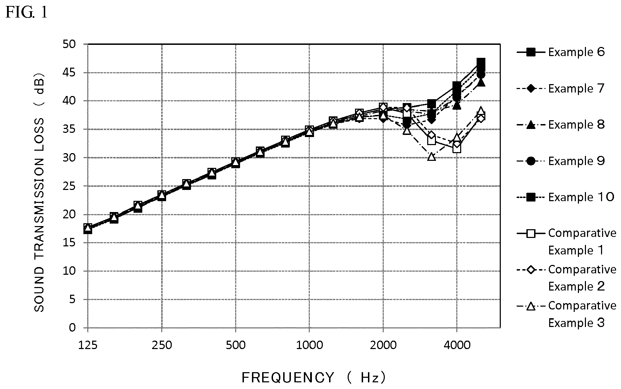

FIG. 1 is a view illustrating sound transmission loss data with respect to frequency that was measured using the specimens obtained in Examples 6 to 10 and Comparative Examples 1 to 3.

### DESCRIPTION OF EMBODIMENTS

The embodiments of the invention are described in detail below.

### 1. Hydrogenated block copolymer [D]

A hydrogenated block copolymer [D] according to one embodiment of the invention is obtained by hydrogenating 90% or more of the unsaturated carbon-carbon bonds included in the main chain, the side chain, and the aromatic ring of a hydrogenated block copolymer [C] (precursor), the hydrogenated block copolymer [D] having a low-temperature-side tanδ peak temperature of -20 to 20°C and a high-temperature-side tanδ peak temperature of 100°C or more with respect to dynamic viscoelastic properties.

The block copolymer [C] includes two or more polymer blocks [A], and one or more polymer blocks [B].

### Polymer block [A]

The polymer block [A] includes a structural unit derived from an aromatic vinyl compound as the main component. The content of the structural unit derived from an aromatic vinyl compound in the polymer block [A] is normally 95 wt% or more, and preferably 98 wt% or more. The polymer block [A] may include a structural unit derived from a linear conjugated diene compound and/or a structural unit derived from an additional vinyl compound as a component other than the structural unit derived from an aromatic vinyl compound. The content of the structural unit derived from a linear conjugated diene compound and/or the structural unit derived from an additional vinyl compound in the polymer block [A] is 5 wt% or less, and preferably 2 wt% or less.

If the content of the structural unit derived from a linear conjugated diene compound and/or the structural unit derived from an additional vinyl compound in the polymer block [A] is too high, the hard segment of the hydrogenated block copolymer [D] according to one embodiment of the invention may have a decreased glass transition temperature Tg₂, and a sheet produced using the hydrogenated block copolymer [D] may exhibit decreased heat resistance.

The two or more polymer blocks [A] included in the hydrogenated block copolymer [D] may be either identical to or different from each other as long as the above range is satisfied.

### Polymer block [B]

The polymer block [B] includes a structural unit derived from a linear conjugated diene compound as the main component. The content of the structural unit derived from a linear conjugated diene compound in the polymer block [B] is normally 80 wt% or more, preferably 90 wt% or more, and more preferably 95 wt% or more. The polymer block [B] may include a structural unit derived from an aromatic vinyl compound and/or a structural unit derived from an additional vinyl compound as a component other than the structural unit derived from a linear conjugated diene compound. The content of the structural unit derived from an aromatic vinyl compound and/or the structural unit derived from an additional vinyl compound in the polymer block [B] is normally 20 wt% or less, preferably 10 wt% or less, and more preferably 5 wt% or less.

The polymer block [B] includes a structural unit in which the linear conjugated diene compound is polymerized through a 1,2-bond and/or a 3,4-bond (i.e., a structural unit derived from 1,2-addition polymerization and 3,4-addition polymerization), and a structural unit in which the linear conjugated diene compound is polymerized through a 1,4-bond (i.e., a structural unit derived from 1,4-addition polymerization). The content of the structural unit derived from the linear conjugated diene compound that is polymerized through a 1,2-bond and/or a 3,4-bond, in the polymer block [B] is normally 40 to 80 wt%, preferably 50 to 75 wt%, and more preferably 55 to 70 wt%, based on the total amount of structural units derived from the linear conjugated diene compound included in the polymer block [B]. When the content of the structural unit derived from the linear conjugated diene compound that is polymerized through a 1,2-bond and/or a 3,4-bond, is within the above range, it is possible to control the glass transition temperature Tg₁ of the soft segment of the hydrogenated block copolymer [D] to be -20 to 20°C, and obtain sound insulation properties within a normal temperature range.

### Aromatic vinyl compound

Examples of the aromatic vinyl compound include styrene; a styrene derivative that is substituted with an alkyl group having 1 to 6 carbon atoms, such as α-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; a styrene derivative that is substituted with a halogen atom, such as 4-chlorostyrene, dichlorostyrene, and 4-monofluorostyrene; a styrene derivative that is substituted with an alkoxy group having 1 to 6 carbon atoms, such as 4-methoxystyrene; a styrene derivative that is substituted with an aryl group, such as 4-phenylstyrene; vinylnaphthalene (e.g., 1-vinylnaphthalene and 2-vinylnaphthalene); and the like. Among these, an aromatic vinyl compound that does not include a polar group (e.g., styrene, and a styrene derivative that is substituted with an alkyl group having 1 to 6 carbon atoms) is preferable from the viewpoint of hygroscopicity, and styrene is particularly preferable from the viewpoint of industrial availability.

### Linear conjugated diene compound

Examples of the linear conjugated diene compound include 1,3-butadiene, isoprene, 2,3-dimethyl-1,3-butadiene, 1,3-pentadiene, and the like. Among these, a linear conjugated diene compound that does not include a polar group is preferable from the viewpoint of hygroscopicity, 1,3-butadiene and isoprene are more preferable from the viewpoint of industrial availability.and isoprene is particularly preferable from the viewpoint of easily controlling the glass transition temperature Tg₁ of the soft segment of the hydrogenated block copolymer [D] to be -20 to 20°C.

### Additional vinyl compound

Examples of the additional vinyl compound include a linear vinyl compound and a cyclic vinyl compound. For example, the additional vinyl compound may be a vinyl compound that may be substituted with a nitrile group, an alkoxycarbonyl group, a hydroxycarbonyl group, or a halogen atom, an unsaturated cyclic acid anhydride, an unsaturated imide compound, or the like. Among these, a compound that does not include a polar group, such as a linear olefin having 2 to 20 carbon atoms (e.g., ethylene, propylene, 1-butene, 1-pentene, 1-hexene, 1-heptene, 1-octene, 1-nonene, 1-decene, 1-dodecene, 1-eicosene, 4-methyl-1-pentene, and 4,6-dimethyl-1-heptene) and a cyclic olefin having 5 to 20 carbon atoms (e.g., vinylcyclohexane, 4-vinylcyclohexene, and norbornene) is preferable from the viewpoint of hygroscopicity, a linear olefin having 2 to 20 carbon atoms is more preferable, and ethylene and propylene are particularly preferable.

### Block copolymer [C]

The block copolymer [C] that is a precursor of the hydrogenated block copolymer [D] is a polymer that includes at least two polymer blocks [A] and at least one polymer block [B]. The number of polymer blocks [A] included in the block copolymer [C] is normally 3 or less, and preferably 2. The number of polymer blocks [B] included in the block copolymer [C] is normally 2 or less, and preferably 1.

The weight average molecular weight Mw(A)ₘₐₓ with respect to the block copolymer [C] is normally 8,000 to 50,000, preferably 9,000 to 40,000, and more preferably 10,000 to 30,000. When the weight average molecular weight Mw(A)ₘₐₓ is within the above range, it is possible to control the glass transition temperature Tg₂ of the hard segment of the hydrogenated block copolymer [D] to be 100°C or more, and achieve excellent heat resistance.

The block copolymer [C] may have an arbitrary block configuration, and may be a linear block copolymer or a radial block copolymer. It is preferable that the block copolymer [C] be a linear block copolymer since excellent mechanical strength can be obtained. It is most preferable that the block copolymer [C] be a triblock copolymer ([A]-[B]-[A]) in which the polymer block [A] is bonded to each terminal of the polymer block [B].

The ratio (wA:wB) of the total weight fraction wA of the polymer block [A] in the block copolymer [C] to the total weight fraction wB of the polymer block [B] in the block copolymer [C] is 15:85 to 40:60, preferably 17:83 to 35:65, and more preferably 20:80 to 30:70. If the weight fraction wB is too low, the hydrogenated block copolymer [D] according to one embodiment of the invention may exhibit decreased sound insulation properties. If the weight fraction wB is too high, a decrease in heat resistance may occur.

The polystyrene-equivalent weight average molecular weight (Mw) of the block copolymer [C] determined by gel permeation chromatography (GPC) (eluent: tetrahydrofuran (THF)) is normally 40,000 to 200,000, preferably 50,000 to 170,000, and more preferably 60,000 to 150,000. The molecular weight distribution (Mw/Mn) of the block copolymer [C] is preferably 3 or less, more preferably 2 or less, and particularly preferably 1.5 or less.

The block copolymer [C] may be produced using a method that alternately polymerizes a monomer mixture (a) that includes an aromatic vinyl compound as the main component, and a monomer mixture (b) that includes a linear conjugated diene compound as the main component, by means of living anionic polymerization or the like; or a method that sequentially polymerizes a monomer mixture (a) that includes an aromatic vinyl compound as the main component, and a monomer mixture (b) that includes a linear conjugated diene compound as the main component, and couples the terminals of the resulting polymer block [B] using a coupling agent, for example.

The monomer mixture (a) normally includes the aromatic vinyl compound in a ratio of 95 wt% or more, and preferably 98 wt% or more, based on the total amount of the monomer mixture (a). The monomer mixture (b) normally includes the linear conjugated diene compound in a ratio of 80 wt% or more, preferably 90 wt% or more, and more preferably 95 wt% or more, based on the total amount of the monomer mixture (b).

The coupling agent is not particularly limited. Examples of the coupling agent include 1,2-dibromoethane, methyldichlorosilane, trichlorosilane, methyltrichlorosilane, tetrachlorosilane, tetramethoxysilane, divinylbenzene, diethyl adipate, dioctyl adipate, benzene-1,2,4-triisocyanate, tolylene diisocyanate, epoxidized 1,2-polybutadiene, epoxidized linseed oil, tetrachlorogermanium, tetrachlorotin, butyltrichlorotin, butyltrichlorosilane, dimethylchlorosilane, 1,4-chloromethylbenzene, bis(trichlorosilyl)ethane, and the like.

The polymer block [B] included in the block copolymer [C] is a random copolymer block in which the content of the structural unit derived from the linear conjugated diene compound that is polymerized through a 3,4-bond and/or a 1,2-bond is increased by polymerizing the linear conjugated diene compound optionally together with an aromatic vinyl compound and an additional vinyl compound in the presence of a specific compound that includes an electron donor atom and functions as a randomizer. The content of the structural unit derived from the linear conjugated diene compound that is polymerized through a 3,4-bond and/or a 1,2-bond can be controlled by adjusting the amount of randomizer.

A compound that includes oxygen (O), nitrogen (N), or the like is preferable as the compound that includes an electron donor atom. Examples of the compound that includes an electron donor atom include an ether compound, a tertiary amine compound, a phosphine compound, and the like. Among these, an ether compound is preferable since the molecular weight distribution of the random copolymer block can be narrowed, and the hydrogenation reaction is rarely hindered.

Specific examples of the compound that includes an electron donor atom include diethyl ether, diisopropyl ether, dibutyl ether, tetrahydrofuran, ethylene glycol dimethyl ether, ethylene glycol diethyl ether, ethylene glycol diisopropyl ether, ethylene glycol dibutyl ether, ethylene glycol methyl phenyl ether, propylene glycol dimethyl ether, propylene glycol diethyl ether, propylene glycol diisopropyl ether, propylene glycol dibutyl ether, di(2-tetrahydrofuryl)methane, diethylene glycol dibutyl ether, dipropylene glycol dibutyl ether, tetramethylethylenediamine, and the like. The compound that includes an electron donor atom is normally used in a ratio of 0.001 to 10 parts by weight, and preferably 0.01 to 1 part by weight, based on 100 parts by weight of the linear conjugated diene compound.

### Hydrogenated block copolymer [D]

The hydrogenated block copolymer [D] according to one embodiment of the invention is obtained by hydrogenating the unsaturated carbon-carbon bonds included in the main chain, the side chain, and the aromatic ring of the block copolymer [C]. The hydrogenation rate of the unsaturated carbon-carbon bonds included in the main chain, the side chain, and the aromatic ring of the hydrogenated block copolymer [D] is normally 90% or more, preferably 95% or more, and more preferably 99% or more. When the hydrogenation rate is high, the resulting formed article exhibits excellent weatherability, heat resistance, and transparency.

The hydrogenation rate of the unsaturated carbon-carbon bonds included in the main chain, the side chain, and the aromatic ring of the hydrogenated block copolymer [D] is normally 90% or more, preferably 95% or more, and more preferably 99% or more. When the hydrogenation rate is high, the resulting formed article exhibits excellent weatherability, heat resistance, and transparency.

The hydrogenation rate of the unsaturated carbon-carbon bonds that are included in the hydrogenated block copolymer [D] and derived from the conjugated diene is normally 90% or more, preferably 95% or more, and more preferably 98% or more. The hydrogenation rate of the unsaturated carbon-carbon bonds that are included in the aromatic ring derived from the aromatic vinyl compound is normally 90% or more, preferably 95% or more, and more preferably 98% or more.

The hydrogenation rate of the hydrogenated block copolymer [D] may be determined by 1H-NMR analysis, or may be determined by comparing the peak areas detected by a UV detector and an RI detector by means of GPC, for example.

The hydrogenation method of unsaturated bond, the reaction mode, and the like are not particularly limited. It is preferable to use a hydrogenation method that can increase the hydrogenation rate, and causes a polymer chain cleavage reaction to only a small extent. Examples of such a hydrogenation method include the method disclosed in WO2011/096389, the method disclosed in WO2012/043708, and the like.

After completion of the hydrogenation reaction, the hydrogenation catalyst and/or the polymerization catalyst may be removed from the reaction solution, and the hydrogenated block copolymer [D] may be collected from the resulting solution. The hydrogenated block copolymer [D] thus collected may normally be pelletized, and may be subjected to the subsequent sheet-forming process or a modification reaction.

The polystyrene-equivalent weight average molecular weight (Mw) of the hydrogenated block copolymer [D] determined by GPC (eluent: THF) is normally 40,000 to 200,000, preferably 50,000 to 170,000, and more preferably 60,000 to 150,000. The molecular weight distribution (Mw/Mn) of the hydrogenated block copolymer [D] is preferably 3 or less, more preferably 2 or less, and particularly preferably 1.5 or less. When the weight average molecular weight (Mw) and the molecular weight distribution (Mw/Mn) of the hydrogenated block copolymer [D] are within the above ranges, the resulting sheet exhibits excellent heat resistance and mechanical strength.

When the block copolymer [C] includes a plurality of polymer blocks [A] and/or a plurality of polymer blocks [B], the ratio (Mw(A)ₘₐₓ/Mw(A)ₘᵢₙ) of the weight average molecular weight Mw(A)ₘₐₓ of a polymer block among the plurality of polymer blocks [A] that has the highest weight average molecular weight to the weight average molecular weight Mw(A)ₘᵢₙ of a polymer block among the plurality of polymer blocks [A] that has the lowest weight average molecular weight, and the ratio (Mw(B)ₘₐₓ/Mw(B)ₘᵢₙ) of the weight average molecular weight Mw(B)ₘₐₓ of a polymer block among the plurality of polymer blocks [B] that has the highest weight average molecular weight to the weight average molecular weight Mw(B)ₘᵢₙ of a polymer block among the plurality of polymer blocks [B] that has the lowest weight average molecular weight, are 5.0 or less, preferably 4.0 or less, and more preferably 3.0 or less. If the ratio (Mw(A)ₘₐₓ/Mw(A)ₘᵢₙ) exceeds 5, the hydrogenated block copolymer [D] exhibits a higher modulus of elasticity, but may exhibit decreased mechanical strength.

If the ratio (Mw(B)ₘₐₓ/Mw(B)ₘᵢₙ) exceeds 5, the high-temperature-side glass transition temperature Tg₂ may decrease, and deterioration in heat resistance may occur.

### 2. Alkoxysilyl group-containing modified hydrogenated block copolymer [E]

An alkoxysilyl group-containing modified hydrogenated block copolymer (hereinafter may be referred to as "modified hydrogenated block copolymer [E]") according to one embodiment of the invention is obtained by introducing an alkoxysilyl group into the hydrogenated block copolymer [D]. The polymer exhibits adhesion to an inorganic substance (e.g., glass), a metal, and the like as a result of introducing an alkoxysilyl group into the polymer.

Examples of the alkoxysilyl group include a trialkoxysilyl group such as a trimethoxysilyl group, a triethoxysilyl group, and a tripropoxysilyl group; an alkyldialkoxysilyl group such as a methyldimethoxysilyl group, a methyldiethoxysilyl group, an ethyldimethoxysilyl group, an ethyldiethoxysilyl group, a propyldimethoxysilyl group, and a propyldiethoxysilyl group; a dialkylalkoxysilyl group such as a dimethylmethoxysilyl group, a dimethylethoxysilyl group, a diethylmethoxysilyl group, a diethylethoxysilyl group, a dipropylmethoxysilyl group, and a dipropylethoxysilyl group; an aryldialkoxysilyl group such as a phenyldimethoxysilyl group and a phenyldiethoxysilyl group; and the like. Among these, a trialkoxysilyl group and an alkyldialkoxysilyl group are preferable from the viewpoint of availability of the raw material, and the like.

The alkoxysilyl group may be bonded directly to the hydrogenated block copolymer [D], or may be bonded to the hydrogenated block copolymer [D] through a divalent organic group. Examples of the divalent organic group include an alkylene group having 1 to 10 carbon atoms, such as a methylene group, an ethylene group, a propylene group, and a trimethylene group; an arylene group having 6 to 20 carbon atoms, such as a 1,4-phenylene group and a 1,4-naphthalene group; an ester group such as -C(=O)-O- and -O-C(=O)-; combinations thereof; and the like.

The alkoxysilyl group is normally introduced into the hydrogenated block copolymer [D] in a ratio of 0.1 to 10 parts by weight, preferably 0.2 to 5 parts by weight, and more preferably 0.3 to 3 parts by weight, based on 100 parts by weight of the hydrogenated block copolymer [D]. If the alkoxysilyl group is introduced into the hydrogenated block copolymer [D] in too small an amount (ratio), the resulting adhesive sheet (glass adhesive sheet) may exhibit insufficient adhesion to glass. If the alkoxysilyl group is introduced into the hydrogenated block copolymer [D] in too large an amount (ratio), alkoxysilyl groups that have been decomposed due to a small amount of water or the like may be crosslinked to a large extent, whereby adhesion to glass may decrease.

The amount of alkoxysilyl groups introduced into the hydrogenated block copolymer [D] may be determined by measuring the ¹H-NMR spectrum of the resulting hydrogenated block copolymer, and calculating the amount of alkoxysilyl groups from the area ratio of the corresponding signal. Note that the number of integrations is increased when the amount of alkoxysilyl groups introduced into the hydrogenated block copolymer [D] is small.

The modified hydrogenated block copolymer [E] may be produced using an arbitrary method. The modified hydrogenated block copolymer [E] may be obtained by reacting the hydrogenated block copolymer [D] with an ethylenically unsaturated silane compound in the presence of an organic peroxide, for example.

The ethylenically unsaturated silane compound is not particularly limited as long as the ethylenically unsaturated silane compound undergoes graft polymerization with the hydrogenated block copolymer [D] in the presence of an organic peroxide to introduce an alkoxysilyl group into the hydrogenated block copolymer [D].

Examples of the ethylenically unsaturated silane compound include a vinyl group-containing alkoxysilane such as vinyltrimethoxysilane, vinyltriethoxysilane, dimethoxymethylvinylsilane, and diethoxymethylvinylsilane; an allyl group-containing alkoxysilane such as allyltrimethoxysilane and allyltriethoxysilane; a p-styryl group-containing alkoxysilane such as p-styryltrimethoxysilane and p-styryltriethoxysilane; a 3-methacryloxypropyl group-containing alkoxysilane such as 3-methacryloxypropyltrimethoxysilane, 3-methacryloxypropylmethyldimethoxysilane, 3-methacryloxypropyltriethoxysilane, and 3-methacryloxypropylmethyldiethoxysilane; a 3-acryloxypropyl group-containing alkoxysilane such as 3-acryloxyprophyltrimethoxysilane and 3-acryloxyprophyltriethoxysilane; a 2-norbornen-5-yl group-containing alkoxysilane such as 2-norbornen-5-yltrimethoxysilane; and the like.

Among these, vinyltrimethoxysilane, vinyltriethoxysilane, dimethoxymethylvinylsilane, diethoxymethylvinylsilane, allyltrimethoxysilane, allyltriethoxysilane, and p-styryltrimethoxysilane are preferable in order to ensure that the resulting modified hydrogenated block copolymer [E] has low hygroscopicity. These ethylenically unsaturated silane compounds may be used either alone or in combination.

The ethylenically unsaturated silane compound is normally used in a ratio of 0.1 to 10 parts by weight, preferably 0.2 to 5 parts by weight, and more preferably 0.3 to 3 parts by weight, based on 100 parts by weight of the hydrogenated block copolymer [D].

The organic peroxide is not particularly limited as long as the organic peroxide functions as a radical reaction initiator. Examples of the organic peroxide include dibenzoyl peroxide, t-butyl peroxyacetate, 2,2-di-(t-butylperoxy)butane, t-butyl peroxybenzoate, t-butylcumyl peroxide, dicumyl peroxide, di-t-hexyl peroxide, 2,5-dimethyl-2,5-di(t-butylperoxy)hexane, di-t-butyl peroxide, 2,5-dimethyl-2,5-di(t-butylperoxy)hexene-3, t-butyl hydroperoxide, t-buthyl peroxyisobutyrate, lauroyl peroxide, dipropionyl peroxide, p-menthane hydroperoxide, and the like. These organic peroxides may be used either alone or in combination.

It is preferable to use a compound having a one-minute half-life temperature of 170 to 200°C as the organic peroxide. More specifically, it is preferable to use t-butylcumyl peroxide, dicumyl peroxide, di-t-hexyl peroxide, 2,5-dimethyl-2,5-di(t-butylperoxy)hexane, di-t-butyl peroxide, 2,5-dimethyl-2,5-di(t-butylperoxy)hexene-3, or the like.

The organic peroxide is normally used in a ratio of 0.01 to 3.0 parts by weight, preferably 0.2 to 2.0 parts by weight, and more preferably 0.3 to 1.0 parts by weight, based on 100 parts by weight of the hydrogenated block copolymer.

The hydrogenated block copolymer [D] may be reacted with the ethylenically unsaturated silane compound in the presence of the organic peroxide using an arbitrary method. It is preferable to use a method that uses a device (e.g., twin-screw kneader) that can continuously implement a heating operation, a kneading (mixing) operation, and an extrusion operation. For example, a mixture that includes the hydrogenated block copolymer [D], the ethylenically unsaturated silane compound, and the organic peroxide may be heated and melted at a temperature equal to or higher than the melting point of the hydrogenated block copolymer [D] using a twin-screw kneader, and kneaded for the desired time to obtain the modified hydrogenated block copolymer [E] (i.e., target product).

The heating-kneading temperature is normally 180 to 230°C, preferably 190 to 210°C, and more preferably 200 to 210°C. When the kneading temperature is within the above range, it is possible to easily knead the mixture since the hydrogenated block copolymer D has moderate melt viscosity, and the alkoxysilyl groups do not undergo a reaction.

The heating-kneading time is normally 0.3 to 5 minutes, preferably 0.5 to 3 minutes, and more preferably about 0.7 to 2 minutes. The kneading time may be appropriately determined so that the organic peroxide is decomposed in a ratio of normally 80% or more, preferably 90% or more, and more preferably 95% or more. The decomposition ratio of the organic peroxide may be estimated from the half-life of the peroxide at a specific temperature.

When continuous kneading equipment (e.g., twin-screw kneader or single-screw extruder) is used, the mixture may be continuously kneaded and extruded so that the residence time falls within the above range.

The molecular weight of the modified hydrogenated block copolymer [E] is substantially identical to that of the hydrogenated block copolymer [D] used as the raw material, since the amount of alkoxysilyl group introduced into the hydrogenated block copolymer [D] is small. However, since the hydrogenated block copolymer [D] is reacted with the ethylenically unsaturated silane compound in the presence of the organic peroxide, the polymer also undergoes a crosslinking reaction and a cleavage reaction, so that the modified hydrogenated block copolymer [E] has a broader molecular weight distribution.

The polystyrene-equivalent weight average molecular weight (Mw) of the modified hydrogenated block copolymer [E] determined by GPC (eluent: THF) is normally 40,000 to 200,000, preferably 50,000 to 150,000, and more preferably 60,000 to 100,000. The molecular weight distribution (Mw/Mn) of the modified hydrogenated block copolymer [E] is preferably 3.5 or less, more preferably 2.5 or less, and particularly preferably 2.0 or less. When the weight average molecular weight (Mw) and the molecular weight distribution (Mw/Mn) of the modified hydrogenated block copolymer [E] are within the above ranges, a laminated glass that includes a sheet formed of the modified hydrogenated block copolymer [E] as an interlayer maintains heat resistance and mechanical strength.

### Additive

The hydrogenated block copolymer [D] and/or the modified hydrogenated block copolymer [E] may be used in the form of a resin composition that also includes various additives that are normally added to a resin. Examples of a preferable additive include a softener and a tackifier that are used to adjust flexibility, a decrease in bonding temperature, adhesion to a metal, and the like; an antioxidant, a UV absorber, a light stabilizer, and an anti-blocking agent that are used to improve thermal stability, light resistance, processability (workability), and the like; and the like.

Specific examples of the softener include low-molecular-weight polyisobutylene, low-molecular-weight polybutene, low-molecular-weight poly-4-methylpentene, low-molecular-weight poly-1-octene, a low-molecular-weight ethylene-α-olefin copolymer, and hydrogenated products thereof; low-molecular-weight polyisoprene, a low-molecular-weight polyisoprene-butadiene copolymer, hydrogenated products thereof; and the like. These softeners may be used either alone or in combination.

Specific examples of the tackifier include a rosin-based resin; a terpene-based resin; a coumarone-indene resin; a styrene-based resin; an aliphatic, alicyclic, or aromatic petroleum resin; hydrogenated products thereof; and the like. These tackifiers may be used either alone or in combination.

The antioxidant, the UV absorber, the light stabilizer, the anti-blocking agent, and the like may respectively be used either alone or in combination. Examples of the antioxidant include a phosphorus-based antioxidant, a phenol-based antioxidant, a sulfur-based antioxidant, and the like. Examples of the UV absorber include an oxybenzophenone-based compound, a benzotriazole-based compound, a salicylate-based compound, a benzophenone-based compound, a benzotriazole-based compound, an acrylonitrile-based compound, a triazine-based compound, a nickel complex salt-based compound, an inorganic powder, and the like. Examples of the light stabilizer include a hindered amine-based light stabilizer.

These additives are normally used in a total amount of 0.01 to 5 wt%, and preferably 0.05 to 3 wt%, based on the total amount of the resin composition.

The additive may be added to the hydrogenated block copolymer [D] and/or the modified hydrogenated block copolymer [E] using an arbitrary method. A known method may be used. For example, each additive may be added to the hydrogenated block copolymer [D] and/or the modified hydrogenated block copolymer [E] in a molten state using a twin-screw kneader, a roll, a Brabender, an extruder, or the like, and the mixture may be kneaded (mixed).

### 3. Sheet formed of hydrogenated block copolymer [D] and/or modified hydrogenated block copolymer [E]

A sheet according to one embodiment of the invention that is formed of the hydrogenated block copolymer [D] and/or the modified hydrogenated block copolymer [E] (hereinafter may be referred to as "sheet [F]") is produced by forming the hydrogenated block copolymer [D] and/or the modified hydrogenated block copolymer [E] in the shape of a sheet using a melt extrusion method or the like. The thickness of the sheet [F] is normally 0.1 to 10 mm, preferably 0.2 to 5 mm, and more preferably 0.3 to 2 mm.

The sheet [F] according to one embodiment of the invention is normally produced by melting the hydrogenated block copolymer [D] and/or the modified hydrogenated block copolymer [E] using an extruder, extruding the molten copolymer in the shape of a film from a T-die provided to the extruder, bringing the extruded sheet into contact with at least one cooling roll, and taking up the formed product.

The melt extrusion conditions are appropriately selected taking account of the composition and the molecular weight of the hydrogenated block copolymer [D] and/or the modified hydrogenated block copolymer [E], and the like.

The cylinder temperature of the extruder is normally set to 170 to 260°C, and preferably 180 to 250°C.

The temperature of the cooling roll of a sheet take-up device is normally set to 50 to 200°C, and preferably 70 to 180°C.

The resulting sheet [F] may be wound in the shape of a roll, or cut into pieces, and may be used as an interlayer for bonding glass sheets or metal sheets, a damping material, and the like.

The thickness of the sheet [F] that is melt-extruded may be appropriately selected. For example, when it is desired to provide an automotive laminated glass with sound insulation properties, the thickness of the interlayer is normally 0.2 to 2 mm, and preferably 0.3 to 1.5 mm. When the thickness of the interlayer is within the above range, it is possible to reduce the coincidence effect by bonding two glass sheets having a thickness of 0.7 to 2.2 mm, and it is economical.

### 4. Laminated glass

A laminated glass according to one embodiment of the invention (hereinafter may be referred to as "laminated glass [G]") includes at least two glass sheets, and the sheet [F] that is formed of the hydrogenated block copolymer [D] and/or the modified hydrogenated block copolymer [E], the glass sheets being bonded in a state in which the sheet [F] is provided between the glass sheets.

The sheet [F] that is formed of the modified hydrogenated block copolymer [E] exhibits high adhesion to glass, and can be bonded to a glass sheet without using a special adhesive.

On the other hand, the sheet [F] that is formed of the hydrogenated block copolymer [D] exhibits poor adhesion to glass, and is desirably bonded to a glass sheet using an adhesive. The modified hydrogenated block copolymer [E] according to one embodiment of the invention is preferable as the adhesive. Note that the modified hydrogenated block copolymer disclosed in WO2012/043708, the modified hydrogenated block copolymer disclosed in WO2013/176258, and the like can also preferably be used as the adhesive.

The laminated glass according to one embodiment of the invention has a structure in which at least a first glass sheet, the sheet [F] that is formed of the hydrogenated block copolymer [D] and/or the modified hydrogenated block copolymer [E], and a second glass sheet are stacked in this order. An adhesive layer may be provided between the glass sheet and the sheet [F] that is formed of the hydrogenated block copolymer [D] and/or the modified hydrogenated block copolymer [E].

Examples of a preferable layer configuration include glass/modified hydrogenated block copolymer [E]/glass, glass/hydrogenated block copolymer [D]/glass, glass/modified hydrogenated block copolymer [E]/hydrogenated block copolymer [D]/modified hydrogenated block copolymer [E]/glass, glass/adhesive layer/hydrogenated block copolymer [D]/adhesive layer/glass, glass/adhesive layer/modified hydrogenated block copolymer [E]/adhesive layer/glass, glass/modified hydrogenated block copolymer (having a glass transition temperature Tg₁ derived from the soft segment of about -50°C)/hydrogenated block copolymer [D]/modified hydrogenated block copolymer (having a glass transition temperature Tg₁ derived from the soft segment of about -50°C)/glass, and the like. Note that the expression "about -50°C" refers to a temperature within a range from -55°C to -45°C.

The first glass sheet and the second glass sheet used for the laminated glass according to one embodiment of the invention may be identical to or differ from each other as to the thickness, the material, and the like.

The thickness of the glass sheet is not particularly limited, but is normally 0.5 to 4 mm, preferably 0.7 to 3 mm, and more preferably 1.0 to 2.5 mm. It is also possible to use glass sheets that differ in thickness (e.g., glass sheet (first glass sheet) having a thickness of 1.0 mm/modified hydrogenated block copolymer [E]/glass sheet (second glass sheet) having a thickness of 0.7 mm).

The glass sheet may be formed of an arbitrary material. For example, the glass sheet may be formed of aluminosilicate glass, aluminoborosilicate glass, uranium glass, potash glass, silicate glass, crystallized glass, germanium glass, quartz glass, soda glass, lead glass, barium borosilicate glass, borosilicate glass, or the like.

The laminated glass according to one embodiment of the invention may be produced using a method that stacks at least the first glass sheet, the sheet [F] that is formed of the hydrogenated block copolymer [D] and/or the modified hydrogenated block copolymer [E], and the second glass sheet in this order to obtain a laminate, puts the laminate in a heat-resistant resin bag that can be decompressed, and effects bonding using an autoclave by heating the laminate under pressure; a method that effects bonding using a vacuum laminator by heating the laminate under reduced pressure; or the like.

The laminated glass according to one embodiment of the invention is characterized by the use of the interlayer that is formed of the hydrogenated block copolymer [D] and/or the modified hydrogenated block copolymer [E] having low hygroscopicity and low moisture permeability. Therefore, even when the laminated glass is used in a high-temperature/high-humidity environment without subjecting the end face of the laminated glass to a waterproof treatment, delamination at the interface between the glass and the interlayer, whitening, and the like rarely occur.

The laminated glass according to one embodiment of the invention is useful as automotive window glass, building window glass, roof glass, soundproof glass, automotive rear glass/sunroof glass, railroad car/ship window glass, and the like.

### EXAMPLES

The invention is further described below by way of examples. Note that the invention is not limited to the following examples. The units "parts" and "%" used in connection with the examples respectively refer to "parts by weight" and "wt%" unless otherwise indicated.

The measurement methods and the evaluation methods used in connection with the examples are described below.
(1) Weight average molecular weight (Mw) and molecular weight distribution (Mw/Mn)
   The molecular weight (standard polystyrene-equivalent value) of the block copolymer and the hydrogenated block copolymer was measured at 38°C by gel permeation chromatography (GPC) (eluent: tetrahydrofuran).
   An HLC-8020 GPC system (manufactured by Tosoh Corporation) was used as the measurement device.
(2) Ratio of structural units derived from 1,2-addition polymerization and 3,4-addition polymerization with respect to total amount of structural units derived from linear conjugated diene compound included in polymer block [B]
   The ratio of structural units derived from 1,2-addition polymerization and 3,4-addition polymerization with respect to the total amount of structural units derived from the linear conjugated diene compound included in the polymer block [B] was calculated from the ratio of ¹H bonded to carbon included in the unsaturated carbon-carbon bond included in the polymer main chain to ¹H bonded to carbon included in the unsaturated carbon-carbon bond included in the polymer side chain based on the ¹H-NMR spectrum of the block copolymer [C] (measured in deuterated chloroform).
(3) Hydrogenation rate
   The hydrogenation rate of the hydrogenated block copolymer [D] refers to the ratio of the number of hydrogenated carbon-carbon bonds to the total number of unsaturated carbon-carbon bonds of the aromatic ring of the repeating unit derived from the aromatic vinyl compound included in the block copolymer [C] (precursor), and unsaturated carbon-carbon bonds of the repeating unit derived from the linear conjugated diene compound included in the block copolymer [C] (precursor).
   The hydrogenation rate of the hydrogenated block copolymer [D] was calculated from the ¹H-NMR spectrum, or calculated by GPC analysis. Specifically, a hydrogenation rate equal to or less than 99% or less was calculated from the ¹H-NMR spectrum, and a hydrogenation rate exceeding 99% was calculated from the ratio of the peak areas detected by a UV detector and an RI detector by means of GPC.
(4) Glass transition temperature (Tg)
   The hydrogenated block copolymer [D] or the modified hydrogenated block copolymer [E] was pressed to prepare a specimen having a length of 50 mm, a width of 10 mm, and a thickness of 1 mm. The dynamic viscoelastic properties of the specimen were measured in accordance with JIS K 7244-4 using a viscoelasticity measurement apparatus ("ARES" manufactured by TA Instruments Japan Inc.) within a temperature range from -100°C to +150°C at a heating rate of 5°C/min. The glass transition temperature Tg₁ derived from the soft segment was calculated from the low-temperature-side peak top temperature with respect to the loss tangent tanδ, and the glass transition temperature Tg₂ derived from the hard segment was calculated from the high-temperature-side peak top temperature with respect to the loss tangent tanδ.
(5) Sound insulation properties
   The hydrogenated block copolymer [D] or the modified hydrogenated block copolymer [E] was extruded to obtain a sheet, and a specimen having a length of 300 mm and a width of 25 mm was prepared from the sheet. One specimen or a plurality of specimens were sandwiched between two float glass sheets having a length of 300 mm, a width of 25 mm, and a thickness of 1.2 mm to prepare a sound transmission loss measurement laminated glass specimen.
   The loss factor corresponding to the frequency was measured using the specimen in accordance with JIS K 7391 (central exciting method) using a vibration damping tester (manufactured by Rion Co., Ltd.). The sound transmission loss corresponding to the frequency was calculated from the ratio of the calculated loss factor to the resonance frequency of the laminated glass specimen.
   The sound insulation properties were evaluated as "Good" when a region in which the sound transmission loss was less than 35 dB was not observed within a frequency range from 2,000 Hz to 4,000 Hz, and evaluated as "Bad" when a region in which the sound transmission loss was less than 35 dB was observed within a frequency range from 2,000 Hz to 4,000 Hz.
(6) Heat resistance
   The hydrogenated block copolymer [D] or the modified hydrogenated block copolymer [E] was extruded to obtain a sheet, and a specimen having a length of 300 mm and a width of 300 mm was prepared from the sheet. One specimen or a plurality of specimens were sandwiched between two float glass sheets having a length of 300 mm, a width of 300 mm, and a thickness of 1.2 mm to prepare a laminated glass specimen.

The specimen was immersed in boiling water (100°C) for 2 hours in a vertical state in accordance with JIS R 3212, and a change in outward appearance was evaluated with the naked eye.

The heat resistance of the laminated glass was evaluated as "Good" when no cracks, air bubbles, discoloration, and the like were observed, and evaluated as "Bad" when cracks, air bubbles, discoloration, and the like were observed.

### Example 1: Production of hydrogenated block copolymer [D1]

A reactor equipped with a stirrer in which the internal atmosphere had been sufficiently replaced by nitrogen, was charged with 270 parts of dehydrated cyclohexane, 0.53 parts of ethylene glycol dibutyl ether, and 0.47 parts of n-butyllithium (15% solution in cyclohexane). 12.5 parts of dehydrated styrene was continuously added to the reactor over 40 minutes while stirring the mixture at 60°C. After the addition, the mixture was stirred at 60°C for 20 minutes. The polymerization conversion rate determined by subjecting the reaction mixture to gas chromatography was 99.5%.

After the continuous addition of 75.0 parts of dehydrated isoprene to the reaction mixture over 100 minutes, the mixture was stirred for 20 minutes. The polymerization conversion rate was 99.5%.

After the continuous addition of 12.5 parts of dehydrated styrene over 60 minutes, the mixture was stirred for 30 minutes. The polymerization conversion rate was about 100%.

0.5 parts of isopropyl alcohol was added to the reaction mixture to terminate the reaction. The resulting block copolymer [C1] had a weight average molecular weight (Mw) of 84,500 and a molecular weight distribution (Mw/Mn) of 1.03, and the ratio "wA:wB" was 25:75. The ratio of structural units derived from 1,2-addition polymerization and 3,4-addition polymerization with respect to the total amount of structural units derived from isoprene was 58%.

The polymer solution obtained as described above was transferred to a pressure-resistant reactor equipped with a stirrer. After the addition of 7.0 parts of a nickel catalyst supported on diatomaceous earth ("E22U" manufactured by JGC Catalysts and Chemicals Ltd., nickel content (amount of nickel supported): 60%) (hydrogenation catalyst) and 80 parts of dehydrated cyclohexane, the mixture was mixed. After replacing the atmosphere inside the reactor by hydrogen gas, hydrogen was supplied to the reactor while stirring the solution to effect a hydrogenation reaction at 190°C for 6 hours under a pressure of 4.5 MPa. The resulting hydrogenated block copolymer [D1] had a weight average molecular weight (Mw) of 89,300 and a molecular weight distribution (Mw/Mn) of 1.04.

After removing the hydrogenation catalyst by filtering the reaction solution, 1.0 parts of a solution prepared by dissolving 0.1 parts of pentaerythrityl tetrakis[3-(3,5-di-t-butyl-4-hydroxyphenyl)propionate] ("Songnox 1010" manufactured by KOYO Chemical Research Center) (phenol-based antioxidant) in xylene was added to and dissolved in the filtrate.

The solvent (cyclohexane and xylene) and other volatile components were removed from the solution at a temperature of 260°C under a pressure of 0.001 MPa or less using a cylindrical evaporator ("Kontro" manufactured by Hitachi Ltd.). The molten polymer was continuously extruded from a die in the shape of a strand, cooled, and cut using a pelletizer to obtain 93 parts of pellets of the hydrogenated block copolymer [D1]. The pellets of the hydrogenated block copolymer [D1] had a weight average molecular weight (Mw) of 88,400, a molecular weight distribution (Mw/Mn) of 1.05, and a hydrogenation rate of about 100%.

The hydrogenated block copolymer [D1] (formed article) was colorless and transparent, and had a glass transition temperature Tg₁ of -6°C and a glass transition temperature Tg₂ of 109°C. The composition and the property values of the hydrogenated block copolymer [D1] are listed in Table 1.

### Example 2: Production of hydrogenated block copolymer [D2]

A polymerization reaction was effected in the same manner as in Example 1, except that the amount of ethylene glycol dibutyl ether was changed to 0.61 parts, and the amount of n-butyllithium (15% solution in cyclohexane) was changed to 0.45 parts.

The polymerization conversion rate after completion of the polymerization reaction was about 100%. The resulting block copolymer [C2] had a weight average molecular weight (Mw) of 88,200 and a molecular weight distribution (Mw/Mn) of 1.03, and the ratio "wA:wB" was 25:75. The ratio of structural units derived from 1,2-addition polymerization and 3,4-addition polymerization with respect to the total amount of structural units derived from isoprene was 65%.

The polymer solution obtained as described above was subjected to a hydrogenation reaction in the same manner as in Example 1. The resulting hydrogenated block copolymer [D2] was processed in the same manner as in Example 1 to obtain 95 parts of pellets of the hydrogenated block copolymer [D2]. The hydrogenated block copolymer [D2] had a weight average molecular weight (Mw) of 92,400, a molecular weight distribution (Mw/Mn) of 1.05, and a hydrogenation rate of about 100%.

The hydrogenated block copolymer [D2] (formed article) was colorless and transparent, and had a glass transition temperature Tg₁ of 2°C and a glass transition temperature Tg₂ of 111°C. The composition and the property values of the hydrogenated block copolymer [D2] are listed in Table 1.

### Example 3: Production of hydrogenated block copolymer [D3]

A polymerization reaction was effected in the same manner as in Example 1, except that the amount of ethylene glycol dibutyl ether was changed to 0.55 parts, the amount of n-butyllithium (15% solution in cyclohexane) was changed to 0.55 parts, and 15 parts of styrene, 70 parts of isoprene, and 15 parts of styrene were subjected to the polymerization reaction.

The polymerization conversion rate after completion of the polymerization reaction was about 100%. The resulting block copolymer [C3] had a weight average molecular weight (Mw) of 72,700 and a molecular weight distribution (Mw/Mn) of 1.03, and the ratio "wA:wB" was 30:70. The ratio of structural units derived from 1,2-addition polymerization and 3,4-addition polymerization with respect to the total amount of structural units derived from isoprene was 50%.

The polymer solution obtained as described above was subjected to a hydrogenation reaction in the same manner as in Example 1. The resulting hydrogenated block copolymer [D3] was processed in the same manner as in Example 1 to obtain 94 parts of pellets of the hydrogenated block copolymer [D3]. The hydrogenated block copolymer [D3] had a weight average molecular weight (Mw) of 76,100, a molecular weight distribution (Mw/Mn) of 1.05, and a hydrogenation rate of about 100%.

The hydrogenated block copolymer [D3] (formed article) was colorless and transparent, and had a glass transition temperature Tg₁ of -14°C and a glass transition temperature Tg₂ of +115°C.

The composition and the property values of the hydrogenated block copolymer [D3] are listed in Table 1.

### Example 4: Production of hydrogenated block copolymer [D4]

A polymerization reaction was effected in the same manner as in Example 1, except that the amount of ethylene glycol dibutyl ether was changed to 0.68 parts, the amount of n-butyllithium (15% solution in cyclohexane) was changed to 0.44 parts, and 10 parts of styrene, 80 parts of isoprene, and 10 parts of styrene were subjected to the polymerization reaction.

The polymerization conversion rate after completion of the polymerization reaction was about 100%. The resulting block copolymer [C4] had a weight average molecular weight (Mw) of 89,600 and a molecular weight distribution (Mw/Mn) of 1.03, and the ratio "wA:wB" was 20:80. The ratio of structural units derived from 1,2-addition polymerization and 3,4-addition polymerization with respect to the total amount of structural units derived from isoprene was 71 %.

The polymer solution obtained as described above was subjected to a hydrogenation reaction in the same manner as in Example 1. The resulting hydrogenated block copolymer [D4] was processed in the same manner as in Example 1 to obtain 88 parts of pellets of the hydrogenated block copolymer [D4]. The hydrogenated block copolymer [D4] had a weight average molecular weight (Mw) of 93,800, a molecular weight distribution (Mw/Mn) of 1.05, and a hydrogenation rate of about 100%.

The hydrogenated block copolymer [D4] (formed article) was colorless and transparent, and had a glass transition temperature Tg₁ of 9°C and a glass transition temperature Tg₂ of 104°C. The composition and the property values of the hydrogenated block copolymer [D4] are listed in Table 1.

**TABLE 1**

| | | | Example 1 | Example 2 | Example 3 | Example 4 |
|---|---|---|---|---|---|---|
| | Block copolymer | | [C1] | [C2] | [C3] | [C4] |
| | Block configuration | | A-B-A | A-B-A | A-B-A | A-B-A |
| | wA: wB | | 25: 75 | 25: 75 | 30: 70 | 20: 80 |
| | Ratio of conjugated diene bonded through vinyl bond | % | 58 | 65 | 50 | 71 |
| | Hydrogenated block copolymer | | [D1] | [D2] | [D3] | [D4] |
| | Weight average molecular weight | - | 88,400 | 92,400 | 76,100 | 93,800 |
| | Hydrogenation rate | % | 100 | 100 | 100 | 100 |
| | Tg₁ | °C | -6 | 2 | -14 | 9 |
| | Tg₂ | °C | 109 | 111 | 115 | 104 |
| | Properties | | Colorless and transparent | Colorless and transparent | Colorless and transparent | Colorless and transparent |

### Example 5: Production of modified hydrogenated block copolymer [E1]

2.0 parts of vinyltrimethoxysilane and 0.2 parts of di-t-butyl peroxide ("PERBUTYL D" manufactured by NOF Corporation, one-minute half-life temperature: 185.9°C) were added to 100 parts of the pellets of the hydrogenated block copolymer [D1] produced in Example 1, and the mixture was mixed using a blender. The mixture was continuously kneaded at a resin temperature of 210°C for a residence time of about 80 seconds using a twin-screw extruder ("TEM37B" manufactured by Toshiba Machine Co., Ltd.). The kneaded resin was continuously extruded in the shape of a strand (diameter: about 2.2 mm) through a die provided to the twin-screw extruder (die temperature: 220°C), and air-cooled (solidified). The solidified strand was cut using a pelletizer to obtain 96 parts of pellets of a modified hydrogenated block copolymer [E1] including a trimethoxysilyl group.

The IR spectrum of the surface of the pellets of the modified hydrogenated block copolymer [E1] was measured by an ATR method using an infrared spectrometer ("iS5" manufactured by Thermo Fisher Scientific). In the IR spectrum, an absorption peak attributed to an Si-OCH₃ group was observed at 1,090 cm⁻¹, and an absorption peak attributed to an Si-CH₂ group was observed at 825 cm⁻¹ and 739 cm⁻¹. These absorption peaks were observed at positions that differ from those (1,075 cm⁻¹, 808 cm⁻¹, 766 cm⁻¹) of vinyltrimethoxysilane.

10 parts of the pellets of the modified hydrogenated block copolymer [E1] were dissolved in 100 parts of cyclohexane, and the solution was poured into 400 parts of dehydrated methanol to coagulate the modified hydrogenated block copolymer [E1]. The coagulate was filtered off, and dried at 25°C under vacuum to isolate 9.5 parts of crumbs of the modified hydrogenated block copolymer [E1]. An absorption band based on the proton of a methoxy group was observed at 3.6 ppm in the ¹H-NMR spectrum (in deuterated chloroform) of the isolated crumbs. It was confirmed from the peak area ratio that 1.9 parts of vinyltrimethoxysilane was bonded to 100 parts of the hydrogenated block copolymer [D1].

The modified hydrogenated block copolymer [E1] (formed article) was colorless and transparent, and had a glass transition temperature Tg₁ of -5°C and a glass transition temperature Tg₂ of 102°C.

### Reference Example 1: Production of hydrogenated block copolymer [D5]

A polymerization reaction was effected in the same manner as in Example 1, except that dibutyl ether (0.58 parts) was used instead of ethylene glycol dibutyl ether, and the amount of n-butyllithium (15% solution in cyclohexane) was changed to 0.43 parts.

The polymerization conversion rate after completion of the polymerization reaction was about 100%. The resulting block copolymer [C5] had a weight average molecular weight (Mw) of 92,300 and a molecular weight distribution (Mw/Mn) of 1.03, and the ratio "wA:wB" was 25:75. The ratio of structural units derived from 1,2-addition polymerization and 3,4-addition polymerization with respect to the total amount of structural units derived from isoprene was 9%.

The polymer solution obtained as described above was subjected to a hydrogenation reaction in the same manner as in Example 1. The resulting hydrogenated block copolymer [D5] was processed in the same manner as in Example 1 to obtain 91 parts of pellets of the hydrogenated block copolymer [D5]. The hydrogenated block copolymer [D2] had a weight average molecular weight (Mw) of 96,700, a molecular weight distribution (Mw/Mn) of 1.05, and a hydrogenation rate of about 100%.

The hydrogenated block copolymer [D5] (formed article) was colorless and transparent, and had a glass transition temperature Tg₁ of -50°C and a glass transition temperature Tg₂ of 110°C.

### Reference Example 2: Production of hydrogenated block copolymer [D6]

A polymerization reaction was effected in the same manner as in Example 1, except that dibutyl ether (0.58 parts) was used instead of ethylene glycol dibutyl ether, the amount of n-butyllithium (15% solution in cyclohexane) was changed to 0.65 parts, and 25 parts of styrene, 50 parts of isoprene, and 25 parts of styrene were subjected to the polymerization reaction.

The polymerization conversion rate after completion of the polymerization reaction was about 100%. The resulting block copolymer [C6] had a weight average molecular weight (Mw) of 63,300 and a molecular weight distribution (Mw/Mn) of 1.03, and the ratio "wA:wB" was 50:50. The ratio of structural units derived from 1,2-addition polymerization and 3,4-addition polymerization with respect to the total amount of structural units derived from isoprene was 9%.

The polymer solution obtained as described above was subjected to a hydrogenation reaction in the same manner as in Example 1. The resulting hydrogenated block copolymer [D6] was processed in the same manner as in Example 1 to obtain 96 parts of pellets of the hydrogenated block copolymer [D6]. The hydrogenated block copolymer [D6] had a weight average molecular weight (Mw) of 66,300, a molecular weight distribution (Mw/Mn) of 1.05, and a hydrogenation rate of about 100%.

The hydrogenated block copolymer [D6] (formed article) was colorless and transparent, and had a glass transition temperature Tg₁ of -50°C and a glass transition temperature Tg₂ of 137°C.

### Reference Example 3: Production of modified hydrogenated block copolymer [E6]

96 parts of pellets of a modified hydrogenated block copolymer [E6] into which a trimethoxysilyl group was introduced, were obtained in the same manner as in Example 5, except that the pellets of the hydrogenated block copolymer [D6] produced in Reference Example 2 were used.

In the IR spectrum of the surface of the pellets of the modified hydrogenated block copolymer [E6] that was measured by an ATR method, an absorption peak attributed to an Si-OCH₃ group was observed at 1,090 cm⁻¹, and an absorption peak attributed to an Si-CH₂ group was observed at 825 cm⁻¹ and 739 cm⁻¹. The modified hydrogenated block copolymer [E6] was analyzed in the same manner as in Example 5, and it was confirmed that 1.8 parts of vinyltrimethoxysilane was bonded to 100 parts of the hydrogenated block copolymer [D6].

The modified hydrogenated block copolymer [E6] (formed article) was colorless and transparent, and had a glass transition temperature Tg₁ of -49°C and a glass transition temperature Tg₂ of 129°C.

### Reference Example 4: Production of sheet [D1F] formed of hydrogenated block copolymer [D1]

The pellets of the hydrogenated block copolymer [D1] produced in Example 1 were extruded using a T-die film melt extrusion device (width of T-die: 600 mm) (provided with an extruder having a screw with a diameter of 40 mm), and an extruded sheet-forming device provided with a casting roll (provided with an embossing pattern) and a sheet take-up device (molten resin temperature: 230°C, T-die temperature: 230°C, casting roll temperature: 40°C) to obtain a sheet [D1F300] (thickness: 300 µm, width: 500 mm) formed of the hydrogenated block copolymer [D1]. The resulting sheet [D1F] was wound around a roll together with a PET film having a thickness of 25 µm.

### Reference Example 5: Production of sheets formed of hydrogenated block copolymers [D2] to [D6], and modified hydrogenated block copolymers [E1] and [E6]

Sheets [D2F300], [D3F300], [D4F300], [D5F300], [D6F300], [E1F300], and [E6F300] having a thickness of 300 µm and a width of 500 mm, and a sheet [E6F80] having a thickness of 80 µm and a width of 500 mm, were formed in the same manner as in Reference Example 4 using the same sheet-forming device as that used in Reference Example 4 (molten resin temperature: 210 to 230°C, T-die temperature: 210 to 230°C, casting roll temperature: 40 to 60°C), except that the pellets of the hydrogenated block copolymers [D2] to [D6] produced in Examples 2 to 4 and Reference Examples 1 and 2, the pellets of the modified hydrogenated block copolymer [E1] produced in Example 5, and the pellets of the modified hydrogenated block copolymer [E6] produced in Reference Example 3, were used, respectively. The resulting sheet was wound around a roll together with a PET film having a thickness of 25 µm.

### Reference Example 6: Production of sheets formed of hydrogenated block copolymer [H1] obtained by selectively hydrogenating only polymer block [B] including monomer unit derived from linear conjugated diene compound

A sheet [H1F300] having a thickness of 300 µm and a width of 500 mm was formed in the same manner as in Reference Example 4 using the same sheet-forming device as that used in Reference Example 4 (molten resin temperature: 230°C, T-die temperature: 230°C, casting roll temperature: 40°C), except that pellets of a selectively hydrogenated styrene-isoprene-styrene block copolymer [H1] ("SEPTON 2007" manufactured by Kuraray Co., Ltd., styrene content: 30%, Tg₁: -53°C, Tg₂: 79°C) were used. The resulting sheet was wound around a roll together with a PET film having a thickness of 25 µm.

### Example 6

Two sheets [E6F80] formed of the modified hydrogenated block copolymer [E6] produced in Reference Example 5, and two sheets [D1F300] formed of the hydrogenated block copolymer [D1] produced in Reference Example 4, were stacked between two float glass sheets (thickness: 1.2 mm, length: 300 mm, width: 25 mm) to obtain a laminate (glass/[E6F80]/[D1F300]/[D1F300]/[E6F80]/glass).

The laminate was put in a resin bag (thickness: 75 µm) having a layer configuration "NY/adhesive layer/PP". The bag was heat-sealed so that only a center area (width: 200 mm) was open, and the opening was heat-sealed using a sealer ("BH-951" manufactured by Panasonic Corporation) while removing air from the bag to seal-tightly pack the laminate. The resin bag adhered to the laminate so as to follow the shape of the laminate. The seal-tightly packed laminated was put in an autoclave, and heated at 140°C for 30 minutes under a pressure of 0.8 MPa to prepare a sound transmission loss measurement laminated glass specimen.

FIG. 1 illustrates the sound transmission loss data measured using the specimen at a temperature of 20°C and a frequency of 125 to 5,000 Hz. The sound transmission loss was equal to or more than 35 dB within a frequency range from 2,000 Hz to 4,000 Hz (i.e., the sound insulation properties were evaluated as "Good"). The results are listed in Table 2.

Two sheets [E6F80] formed of the modified hydrogenated block copolymer [E6] produced in Reference Example 5, and two sheets [D1F300] formed of the hydrogenated block copolymer [D1] produced in Reference Example 4, were stacked between two float glass sheets (thickness: 1.2 mm, length: 300 mm, width: 300 mm) to obtain a laminate (glass/[E6F80]/[D1F300]/[D1F300]/[E6F80]/glass), and a heat resistance evaluation laminated glass specimen was prepared in the same manner as the sound transmission loss measurement laminated glass specimen.

The laminated glass specimen was held in boiling water (100°C) for 2 hours, and a change in outward appearance was evaluated with the naked eye. No cracks, air bubbles, discoloration, and the like were observed, and the heat resistance was evaluated as "Good". The results are listed in Table 2.

### Examples 7 to 10

Laminated glass specimens were prepared in the same manner as in Example 6, except that the sheets [D2F300] to [D4F300] formed of the hydrogenated block copolymers [D2] to [D4], and the sheet [E6F80] formed of the modified hydrogenated block copolymer [E6] were used, and the layer configuration of the interlayer was changed as shown in Table 2.

FIG. 1 illustrates the sound transmission loss data with respect to frequency that was measured using the resulting specimens. When the laminated glass specimens prepared in Examples 7 to 10 were used, the sound transmission loss was equal to or more than 35 dB within a frequency range from 2,000 Hz to 4,000 Hz (i.e., the sound insulation properties were evaluated as "Good"). When the laminated glass specimens were subjected to the heat resistance test, no cracks, air bubbles, discoloration, and the like were observed (i.e., the heat resistance was evaluated as "Good"). The results are listed in Table 2.

### Comparative Example 1

A laminated glass specimen was prepared in the same manner as in Example 6, except that the sheet [D5F300] formed of the hydrogenated block copolymer [D5], and the sheet [E6F80] formed of the modified hydrogenated block copolymer [E6] were used, and the layer configuration of the interlayer was changed as shown in Table 2.

FIG. 1 illustrates the sound transmission loss data with respect to frequency that was measured using the resulting specimen. When the laminated glass specimen prepared in Comparative Example 1 was used, a region in which the sound transmission loss was less than 35 dB due to a coincidence effect was observed within a frequency range from 2,000 Hz to 4,000 Hz (i.e., the sound insulation properties were evaluated as "Bad").

When the laminated glass specimen was subjected to the heat resistance test, no cracks, air bubbles, discoloration, and the like were observed (i.e., the heat resistance was evaluated as "Good"). The results are listed in Table 2.

### Comparative Example 2

A laminated glass specimen was prepared in the same manner as in Example 6, except that the sheet [H1F300] formed of the selectively hydrogenated block copolymer [H1], and the sheet [E6F80] formed of the modified hydrogenated block copolymer [E6] were used, and the layer configuration of the interlayer was changed as shown in Table 2.

FIG. 1 illustrates the sound transmission loss data with respect to frequency that was measured using the resulting specimen. When the laminated glass specimen prepared in Comparative Example 2 was used, a region in which the sound transmission loss was less than 35 dB due to a coincidence effect was observed within a frequency range from 2,000 Hz to 4,000 Hz (i.e., the sound insulation properties were evaluated as "Bad").

When the laminated glass specimen was subjected to the heat resistance test, no cracks, air bubbles, discoloration, and the like were observed, but displacement of the glass sheets bonded through the interlayer was observed (i.e., the heat resistance was evaluated as "Bad"). The results are listed in Table 2.

### Comparative Example 3

A laminated glass specimen was prepared in the same manner as in Example 6, except that the sheet [D6F300] formed of the hydrogenated block copolymers [D6], and the sheet [E6F80] formed of the modified hydrogenated block copolymer [E6] were used, and the layer configuration of the interlayer was changed as shown in Table 2.

FIG. 1 illustrates the sound transmission loss data with respect to frequency that was measured using the resulting specimen. When the laminated glass specimen prepared in Comparative Example 3 was used, a region in which the sound transmission loss was less than 35 dB due to a coincidence effect was observed within a frequency range from 2,000 Hz to 4,000 Hz (i.e., the sound insulation properties were evaluated as "Bad").

When the laminated glass specimen was subjected to the heat resistance test, no cracks, air bubbles, discoloration, and the like were observed (i.e., the heat resistance was evaluated as "Good"). The results are listed in Table 2.

**TABLE 2**

| | | Thickness | Example 6 | Example 7 | Example 8 | Example 9 | Example 10 | Comparative Example 1 | Comparative Example 2 | Comparative Example 3 |
|---|---|---|---|---|---|---|---|---|---|---|
| Laminated glass | Glass | mm | 1.2 | 1.2 | 1.2 | 1.2 | 1.2 | 1.2 | 1.2 | 1.2 |
| | Configuration of interlayer | Sheet | [E6F80] | [E6F80] | - | [E6F80] | [E6F80] | [E6F80] | [E6F80] | [E6F80] |
| | | | [D1F300] | [D1F300] | [E1F300] | [D2F300] | [D3F300] | [D5F300] | [H1F300] | [D6F300] |
| | | | [D1F300] | [E6F300] | [E1F300] | [D2F300] | [D4F300] | [D5F300] | [H1F300] | [D6F300] |
| | | | [E6F80] | [E6F80] | - | [E6F80] | [E6F80] | [E6F80] | [E6F80] | [E6F80] |
| | Total thickness of interlaver | µm | 760 | 760 | 600 | 760 | 760 | 760 | 760 | 760 |
| | Glass | mm | 1.2 | 1.2 | 1.2 | 1.2 | 1.2 | 1.2 | 1.2 | 1.2 |
| Evaluation of sound transmission loss | | | Good | Good | Good | Good | Good | Bad | Bad | Bad |
| Evaluation of heat resistance | | | Good | Good | Good | Good | Good | Good | Bad | Good |

FIG. 1 illustrates the sound transmission loss data with respect to frequency that was measured using the resulting specimen. As illustrated in FIG. 1, the data obtained using the specimens prepared in Examples 6 to 10 and Comparative Examples 1 to 3 was almost identical within a frequency range from 125 Hz to about 2,000 Hz.

The following were confirmed from the results obtained in the examples and the comparative examples.

When the hydrogenated block copolymer [D] was produced by hydrogenating the block copolymer [C] including two or more polymer blocks [A] and one or more polymer blocks [B], the polymer block [A] including a monomer unit derived from an aromatic vinyl compound as the main component, and the polymer block [B] including a monomer unit derived from a linear conjugated diene compound as the main component, and a monomer unit polymerized with the monomer unit derived from the linear conjugated diene compound included in the polymer block [B] through a vinyl bond was introduced, the low-temperature-side tanδ peak temperature (i.e., the glass transition temperature Tg₁ derived from the soft segment) could be controlled to be -20 to 20°C, and the high-temperature-side tanδ peak temperature (i.e., the glass transition temperature Tg₂ derived from the hard segment) could be controlled to be 100°C or more with respect to dynamic viscoelastic properties (Examples 1 to 4).

When a laminated glass was produced using an interlayer formed of the hydrogenated block copolymer [D] and/or the modified hydrogenated block copolymer [E] having a low-temperature-side glass transition temperature Tg₁ (derived from the soft segment) of -20°C or less, and having no tanδ peak within a range from -20°C to 20°C (Comparative Examples 1 to 3), a region in which the sound transmission loss decreased due to a coincidence effect was observed within a frequency range from 2,000 Hz to 4,000 Hz (i.e., the sound insulation properties were poor).

The selectively hydrogenated block copolymer in which the unsaturated carbon-carbon bonds of the aromatic ring were not hydrogenated, had a high-temperature-side glass transition temperature Tg₂ (derived from the hard segment) of less than 100°C. When the selectively hydrogenated block copolymer was used as the interlayer (Comparative Example 2), sufficient heat resistance could not be maintained at a temperature of 100°C at which an automotive laminated glass is subjected to a heat resistance test.

When a laminated glass was produced using an interlayer formed of the hydrogenated block copolymer [D] and/or the modified hydrogenated block copolymer [E] having a low-temperature-side tanδ peak temperature (with respect to dynamic viscoelastic properties) (i.e., the glass transition temperature Tg₁ derived from the soft segment) of -20 to 20°C (Examples 6 to 10), the coincidence effect was reduced, and a decrease in sound transmission loss was suppressed within a frequency range from 2,000 Hz to 4,000 Hz (i.e., the sound insulation properties were improved).

### INDUSTRIAL APPLICABILITY

It is possible to provide a laminated glass that exhibits excellent sound insulation properties by utilizing a sheet that is formed of the specific hydrogenated block copolymer according to the embodiments of the invention as a laminated glass interlayer. Therefore, the hydrogenated block copolymer according to the embodiments of the invention is industrially useful.

## Claims

1. A hydrogenated block copolymer [D] obtained by hydrogenating a block copolymer [C] that comprises two or more polymer blocks [A] and one or more polymer blocks [B], the polymer block [A] comprising a monomer unit derived from an aromatic vinyl compound as a main component, and the polymer block [B] comprising a monomer unit derived from a linear conjugated diene compound as a main component, the hydrogenated block copolymer [D] having a low-temperature-side tanδ peak temperature of -20 to 20°C and a high-temperature-side tanδ peak temperature of 100°C or more with respect to dynamic viscoelastic properties,
the hydrogenated block copolymer [D] being obtained by hydrogenating 90% or more of unsaturated carbon-carbon bonds included in a main chain, a side chain, and an aromatic ring of the block copolymer [C] that is **characterized in that** a ratio (wA:wB) of a total weight fraction wA of the polymer block [A] in the block copolymer [C] to a total weight fraction wB of the polymer block [B] in the block copolymer [C] is 15:85 to 40:60, and a ratio of structural units derived from 1,2-addition polymerization and 3,4-addition polymerization with respect to a total amount of structural units derived from the linear conjugated diene compound included in the polymer block [B] is 40 wt% or more, and
the hydrogenated block copolymer [D] having a weight average molecular weight of 40,000 to 200,000.

2. A modified hydrogenated block copolymer [E] obtained by introducing an alkoxysilyl group into the hydrogenated block copolymer [D] according to claim 1.

3. A laminated glass comprising glass sheets, and at least one sheet that is formed of the hydrogenated block copolymer [D] according to claim 1 and/or the modified hydrogenated block copolymer [E] according to claim 2, the glass sheets being bonded in a state in which the at least one sheet is provided between the glass sheets as an interlayer.
